# EUROPEAN PATENT APPLICATION

(11) **EP 4 686 217 A1**
(43) Date of publication of application: **28.01.2026**
(21) Application number: 24190448.1
(22) Date of filing: 23.07.2024
(51) Int. Cl.: H04Q 9/00, H04W 52/02, H04W 4/70

(54) **METHODS OF TRANSMITTING DATA FROM A UTILITY METERING DEVICE TO A FURTHER DEVICE USING LONG RANGE, LORA, COMMUNICATIONS**

(71) Applicant: Landis+Gyr GmbH, 90459 Nürnberg (DE)
(72) Inventor: Bär, Siegfried, 90459 Nürnberg (DE)
(74) Representative: Marks & Clerk LLP

(57) **Abstract**

A method (400, 500) of transmitting data, by a utility metering device (200) and to a further device, using long range, LoRa, communications. The method (400, 500) comprises assigning, to each item of data (302a-j) of a plurality of data (300) to be transmitted by the utility metering device (200), a priority level from a plurality of priority levels; determining a desired transmission interval based a desired energy consumption from a power source powering the utility metering device (200), during transmission, by the utility metering device, of a predetermined size of data at a first data rate associated with a first spreading factor, wherein the first data rate is one of a plurality of predefined data rates, each data rate of the plurality of data rates being associated with a corresponding spreading factor, and wherein the first data rate is the lowest data rate of the plurality of predefined data rates and the first spreading factor is the highest spreading factor of the corresponding spreading factors; determining a transmission data rate; determining which one or more items of data, of the plurality of data, to transmit at the desired transmission interval, based on the determined transmission data rate and the priority level assigned to each item of data; and transmitting the determined one or more items of data to the further device at the desired transmission interval using the determined transmission data rate.

## Description

### Technical field

The invention relates to methods of transmitting data from a utility metering device to a further device using long range, LoRa, communications.

### Background

Long Range (LoRa) low-power wide-area network (LPWAN) technology may be used by wireless battery-operated devices, for long range and low power communications. LoRa LPWAN technology may, for example, be used to facilitate communications between battery-powered utility metering devices, installed at an installation site to measure consumption of a utility (such as water, electricity, gas, etc.) and one or more further devices (such as gateways, headend systems, etc.) located remotely from the installation site. For example, LoRa LPWAN technology may be used to facilitate transmission of data, such as utility consumption data, a metering device identifier, error data etc., from a utility metering device to a further device for billing, error diagnostics, and so on.

Higher spreading factors may be used in LoRa LPWAN technology to compensate for poor communication connections between the LoRa devices (such as battery-powered utility metering devices) and the further devices that the LoRa devices are configured to communicate with (e.g. the gateways, headend systems, etc.). However, while higher spreading factors provide a more robust communication signal, which is more resistant to interference from other signals and noise, the higher the spreading factor, the greater the time required to transmit a given amount of data.

This means that more energy is consumed from a battery of a battery-powered utility metering device to transmit an amount of data at a higher spreading factor when compared to the energy consumed by the battery to transmit the same amount of data at a lower spreading factor. As such, the batteries of utility metering devices are drained more quickly when the utility metering devices are required to transmit data at higher spreading factors (e.g. to ensure robust communications) than when the utility metering devices are able to transmit data at lower spreading factors.

There exists a need for an improved method for efficient and robust transmission of data by a utility metering device, such as a battery-powered utility metering device.

### Summary

According to the invention in a first aspect, there is provided a method of transmitting data, by a utility metering device and to a further device, using long range, LoRa, communications, the method comprising assigning, to each item of data of a plurality of data to be transmitted by the utility metering device and to the further device, a priority level from a plurality of priority levels; determining a desired transmission interval based on a desired energy consumption from a power source powering the utility metering device, during transmission, by the utility metering device, of a predetermined size of data at a first data rate associated with a first spreading factor, wherein the first data rate is one of a plurality of predefined data rates, each data rate of the plurality of data rates being associated with a corresponding spreading factor, and wherein the first data rate is the lowest data rate of the plurality of predefined data rates and the first spreading factor is the highest spreading factor of the corresponding spreading factors; determining a transmission data rate; determining which one or more items of data, of the plurality of data, to transmit at the desired transmission interval, based on the determined transmission data rate and the priority level assigned to each item of data; and transmitting the determined one or more items of data to the further device at the desired transmission interval using the determined transmission data rate.

Optionally, the power source is a battery.

Optionally, the desired transmission interval is determined based on the desired energy consumption from the battery, during an awake time of the utility metering device, during transmission of the predetermined size of data at the first data rate.

Optionally, the transmission data rate is one of the plurality of predefined data rates.

Optionally, the plurality of priority levels comprises a first priority level indicating a highest priority, and wherein the predetermined size of data is equal to or greater than a size of item(s) of data assigned the first priority level.

Optionally, the predetermined size of data is equal to the size of the item(s) of data assigned the first priority level, and wherein if the determined transmission data rate is the first data rate, only the item(s) of data assigned the first priority level are transmitted to the further device at the desired transmission interval.

Optionally, if the determined transmission data rate is a data rate higher than the first data rate, the item(s) of data assigned the first priority level and item(s) of data associated with a further priority level, lower than the first priority level, are determined to be transmitted to the further device at the desired transmission interval.

Optionally, the plurality of priority levels further comprises a second priority level, indicating a second highest priority, and wherein a size of item(s) of data assigned the second priority level is less than or equal to the size of the item(s) of data assigned the first priority level.

Optionally, the plurality of data rates comprises a second data rate associated with a second spreading factor, and wherein the second data rate is the second lowest data rate of the plurality of predefined data rates and the second spreading factor is the second highest spreading factor of the corresponding spreading factors.

Optionally, if the determined transmission data rate is the second data rate, the item(s) of data assigned the first priority level and the item(s) of data assigned the second priority level are determined for transmission to the further device at the desired transmission interval.

Optionally, the plurality of priority levels further comprises a third priority level, indicating a third highest priority, and wherein a size of item(s) of data assigned the third priority level is less than or equal to the size of the item(s) of data assigned the first priority level plus the item(s) of data assigned the second priority level, wherein the plurality of data rates comprises a third data rate associated with a third spreading factor, and wherein the third data rate is the third lowest data rate of the plurality of predefined data rates and the third spreading factor is the third highest spreading factor of the corresponding spreading factors, and wherein if the determined transmission data rate is the third data rate, the item(s) of data assigned the first priority level, the item(s) of data assigned the second priority level, and the item(s) of data assigned the third priority level are determined for transmission to the further device at the desired transmission interval.

Optionally, the method further comprises determining that the item(s) of data assigned the first priority level are to be transmitted at the desired transmission interval; determining a further transmission interval for each priority level, of the one or more priority levels, different to the first priority level, each further transmission interval defining the interval at which data assigned the corresponding priority level is to be transmitted; and determining that item(s) of data assigned a priority level different to the first priority level are to be transmitted at the corresponding further transmission interval.

Optionally, the predetermined size of data used to determine the desired transmission interval is greater than the size of the item(s) of data assigned the first priority level by an additional amount of data, and wherein each further transmission interval is determined based on the transmission data rate and the size of the additional amount of data.

Optionally, the plurality of priority levels further comprise a second priority level, indicating a second highest priority, and wherein determining the further transmission interval for the second priority level comprises: comparing a size of item(s) of data assigned the second priority level to the size of the additional amount of data; and defining a second transmission interval for transmission of the item(s) of data assigned the second priority level if the size of the item(s) of data assigned the second priority level is greater than the size of the additional amount of data, the second transmission interval being greater than the desired transmission interval.

Optionally, the method further comprises splitting the item(s) of data assigned the second priority level into one or more subsets, the maximum size of each subset being equal to the size of the additional amount of data; determining the second transmission interval by multiplying the desired transmission interval by the number of subsets; and transmitting each subset at the second transmission interval.

### Brief description of drawings

Figure 1 show a schematic view of an exemplary utility metering system;
Figure 2 show a schematic view of an exemplary utility metering device;
Figure 3 shows a schematic view of an exemplary set of data for transmission by an exemplary utility metering device;
Figure 4 shows an exemplary method of transmitting, from an exemplary utility metering device and to a further device, one or more items of data;
Figure 5 shows an exemplary method of transmitting, from an exemplary utility metering device and to a further device, one or more items of data; and
Figure 6 shows a schematic view of a series of exemplary transmissions of one or more items of data, from an exemplary utility metering device and to a further device.

### Detailed description

Modern utility metering systems may typically comprise a plurality of utility metering devices, such as electric, gas or water utility meters, that measure consumption of a respective utility, and transmit consumption data, status data and/or other data to a headend system via a network. The data may be used for billing, maintenance and other purposes.

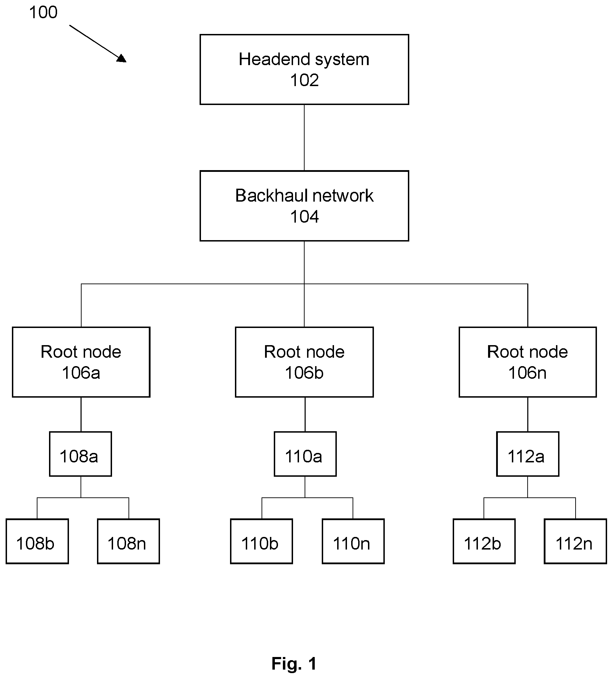

Figure 1 shows a network topography of a typical utility metering system 100. The utility metering system 100 comprises a headend system 102, a backhaul network 104 and a plurality of root nodes (also referred to as collectors) 106a-n. Communication between the headend system 102 and the plurality of root nodes 106a-n may be facilitated by the backhaul network 104. The backhaul network 104 may be a wired network (e.g. Ethernet or fibre optic cable) and/or a wireless network (e.g. a cellular network).

Each root node 106a-n may be configured for data communication with one or more nodes (also referred to as endpoints) to perform operations such as managing the nodes, collecting data from the nodes, and transmitting data received from the nodes to the headend system 102. The nodes may comprise the utility metering devices. In the particular example shown in Figure 1, the root node 106a is in data communication with the utility metering devices 108a-n, the root node 106b is in data communication with the utility metering devices 110a-n and the root node 106n is in data communication with the utility metering devices 112a-n. One or more of the utility metering devices may be considered a parent node, and the other utility metering devices may communicate with the root nodes 106a-n via the parent nodes. In the particular example of Figure 1, utility metering devices 108a, 110a and 112a are parent nodes. The root nodes 106a-n may aggregate the data received from the respective utility metering devices 108a-n, 110a-n and 112a-n and transmit the data to the headend system 102. Each root node 106a-n may be a personal area network (PAN) coordinator, a gateway, or any other device capable of communicating with the headend system 102.

The headend system 102 functions as a central processing system that receives data from the root nodes 106a-n. The headend system 104, or another system associated with the utility company, can process or analyse the collected data for various purposes, such as billing, performance analysis, or troubleshooting.

Each utility metering device 108a-n, 110a-n, 112a-n may be installed at an installation site that is remote from the other utility metering devices, the root nodes 106a-n, and/or the headend system 102. As such, each utility metering device 108a-n, 110a-n, 112a-n may be required to communicate with other utility metering devices (such as parent utility metering devices), and/or the root nodes 106a-n, using LoRa communications. The utility metering devices disclosed herein are therefore considered LoRa devices (i.e. devices configured to communicate using LoRa communications).

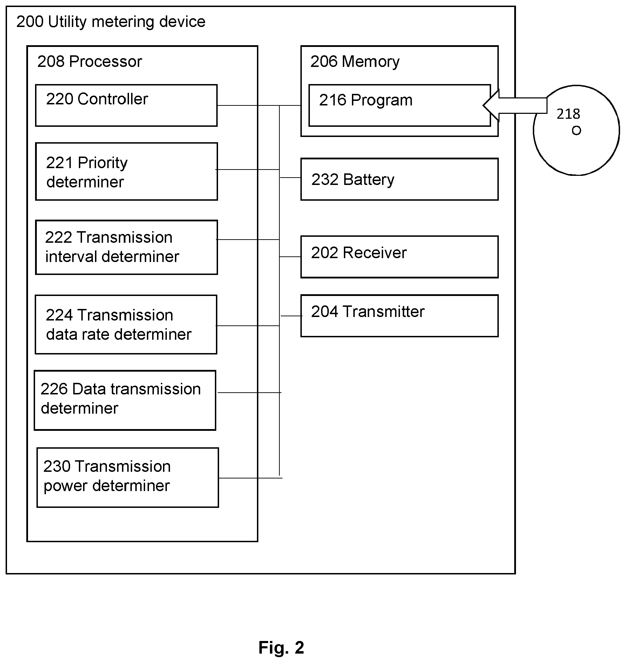

An exemplary utility metering device 200 is shown in Figure 2. The utility metering device 200 may be configured for data communication with further device(s), for example, one or more associated utility metering devices and/or root nodes 106a-n, or one or more other devices, as described above in respect of Figure 1.

The utility metering device 200 may comprise a receiver 202 and/or a transmitter 204. The receiver 202 and/or the transmitter 204 may be in data communication with other entities and/or functions in a telecommunications network, such as user equipment, servers/hubs, other utility metering devices, root nodes 106a-n, the headend system 102, etc., and are configured to transmit and receive data accordingly. The receiver 202 and/or transmitter 204 may be configured to transmit and receive data respectively, according to the LoRaWAN specification/standard.

The utility metering device 200 may further comprise a memory 206 and a processor 208. The memory 206 may have a computer program 216 stored therein. The computer program 216 may comprise instructions for performing the methods disclosed herein.

The computer program 216 may be loaded in the memory 206 from a non-transitory computer readable medium 218, on which the computer program is stored.

The utility metering device 200 may further comprise a controller 220, a priority determiner 221, a transmission interval determiner 222, a transmission data rate determiner 224, a data transmission determiner 226, and a transmission power determiner 230. The processor 208 is configured by the computer program 216 to perform one or more of the functions of the controller 220, the priority determiner 221, the transmission interval determiner 222, the transmission data rate determiner 224, the data transmission determiner 226, and the transmission power determiner 230.

Each of the receiver 202, transmitter 204, memory 206, processor 208, controller 220, priority determiner 221, transmission interval determiner 222, transmission data rate determiner 224, data transmission determiner 226, transmission power determiner 230 may be in data communication with the other components 202, 204, 206, 208, 220, 221, 222, 224, 226, 230 of the utility metering device 200. The utility metering device 200 can be implemented as a combination of computer hardware and software. The memory 206 stores the various programs/executable files that are implemented by a processor 208, and also provides a storage unit for any required data.

The utility metering device 200 may further comprise a power source configured to provide the necessary energy (e.g. electronic energy) for implementing the methods described herein. In the exemplary arrangement disclosed herein, the power source comprises a battery 232. The battery 232 may be a rechargeable battery, i.e. the battery may discharge during operation of the utility metering device (e.g. in measuring consumption of a utility, transmitting data etc.) and be recharged in order to provide an energy source for further operations of the utility metering device.

As mentioned above, the utility metering device 200 may be installed at an installation/customer site and configured to measure a utility consumed by an end user (for example power, water or gas). The utility metering device 200 may be in data communication with a further device, such as another utility metering device, and/or a root node 106a-n, which is configured to route messages/data between the utility metering device 200 and the headend system 102, and/or another device. In the specific example of Figure 1, the utility metering device 200 is configured to transmit data to one of the root node(s) 106a-n, directly or via another utility metering device, using Long Range, LoRa, communications. Operation of the utility metering device 200, including transmission of data is powered by the battery 232.

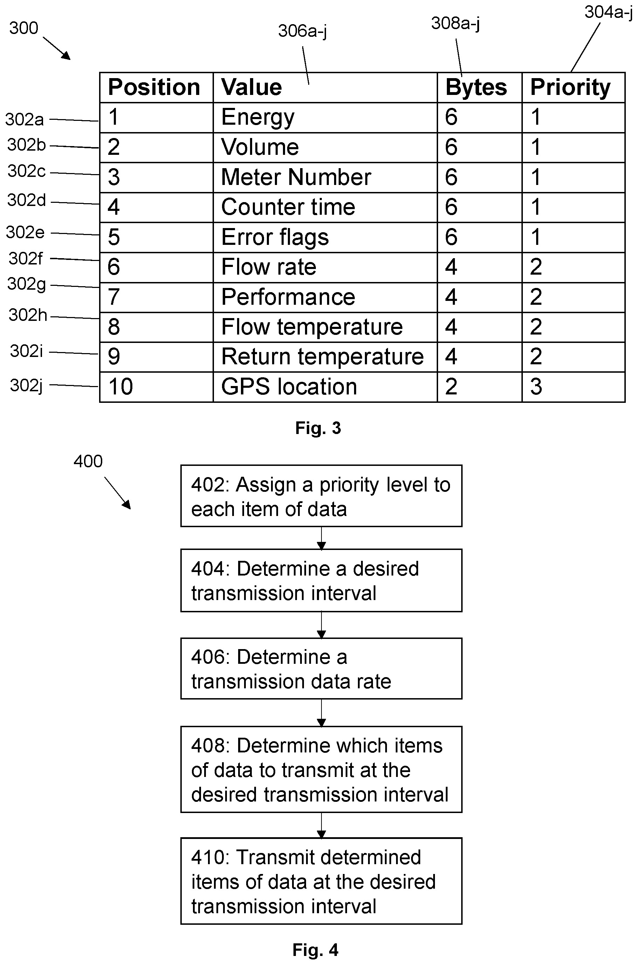

Figure 3 shows schematically an exemplary set of data 300 that may be transmitted by the utility metering device 200 to a further device (such as another utility metering device, a root node(s) 106a-n, a further device, etc.). The set of data 300 comprises a plurality of individual items of data 302a-j. The set of data 300 depicted in Figure 3 may, for example, be transmitted by a heat utility meter. As such, the items of data 302a-j comprise parameters such as, the flow rate 302f, the flow temperature 302h and the return temperature 302i, etc, which may be unique to a heat utility meter. It will be understood that the items of data depicted in Figure 3 are illustrative examples only, and that in alternative arrangements, different and/or additional items of data may be transmitted by the utility metering device 200. It will also be understood that in alternative arrangements, the utility metering device 200 may not be a heat utility meter, and may for example be a water utility meter, power utility meter, gas utility meter, etc. and that different and/or additional items of data may be transmitted in dependence on the type of utility metering device 200.

Each item of data 302a-j is assigned a priority level, 304a-j. The priority level may be indicative of a relative importance of transmission of the item of data to the further device. In the exemplary set of data 300 depicted in Figure 3, each item of data 302a-e is assigned a first priority level denoted "1", indicating that each item of data 302a-e is of the highest priority/importance for transmission to the further device (and, for example, subsequent receipt and processing by the further device). Each item of data 302f-i is assigned a second priority level denoted "2", indicating that each item of data 302f-i is of lesser priority/importance for transmission to the further device, when compared to the items of data 302a-e. The item of data 302j is assigned a third priority level denoted "3", indicating that it is of lesser priority/importance for transmission to the further device, when compared to the items of data 302f-i. In exemplary arrangements, the priority level of each item of data 302a-j may be pre-set. That is, on programming or configuration of the utility metering device 200, a priority level may be assigned to each item of data to be transmitted by the utility metering device 200. The priority level of each item of data 302a-j may be adjusted (e.g. by an operator) at any point after programming or configuration of the utility metering device 200, as required. The relevance of the priority level will be discussed in further detail below.

Each item of data 302a-j may further comprise a data value 306a-j and a size 308a-j. The data value 306 may comprise the associated parameter/data of interest. For example, for item of data 302c "Meter Number", the data value 306c may comprise a utility metering device identifier; for item of data 302a "Energy", the data value 306a may comprise consumption data relating to the energy consumed to heat/cool a property/area at the installation site. The size 308a-j may indicate the size, i.e. the number of bytes or bits, of each item of data. In the exemplary set of data 300 depicted in Figure 3, each item of data 302a-e is 6 bytes in size, each item of data 302f-i is 4 bytes in size, and the item of data 302j is 2 bytes in size.

In LoRa communications, data rates are used to define the speed at which data, such as one of more of the items of data 302a-j, is transmitted (and may for example, have a unit of bits per second). The data rate is inversely related to the spreading factor used. The spreading factor determines how many symbols are used to encode each bit of data. A higher spreading factor means more symbols are used per bit of data, therefore increasing the time it takes to transmit each bit of data, and resulting in a lower data rate (i.e. a slower transmission time). In contrast, a lower spreading factor means fewer symbols are used per bit of data, therefore reducing the time it takes to transmit each bit of data (when compared to a higher spreading factor), and resulting in a higher data rate.

The LoRaWAN specification/standard defines a plurality of predefined data rates that must be supported for LoRa communications. The predefined data rates are labelled DR0, DR1, DR2, DR3, DR4, and DR5, with DR0 being the lowest data rate, and DR5 being the highest data rate.

Within this specification, DR0 is referred to as the first data rate (and is the lowest data rate of the plurality of predefined data rates); DR1 is the second data rate (and is the second lowest data rate of the plurality of predefined data rates); DR2 is the third data rate (and is the third lowest data rate of the plurality of predefined data rates); DR3 is the fourth data rate (and is the fourth lowest data rate of the plurality of predefined data rates); DR4 is the fifth data rate (and is the fifth lowest data rate of the plurality of predefined data rates); and DR5 is the sixth data rate (and is the sixth lowest, or the highest, data rate of the plurality of predefined data rates).

Each data rate of the predefined data rates, DR0-DR5, has an associated spreading factor. Each predefined data rate may further have an associated bandwidth. For example, according to the LoRa Regional Parameters for Europe in the ISM 868 band, DR0 to DR5 may be defined as follows:

| **Data Rate (DR)** | **Spreading Factor (SF)** | **Bandwidth (kHz)** |
|---|---|---|
| DR0 | SF12 | 125 |
| DR1 | SF11 | 125 |
| DR2 | SF10 | 125 |
| DR3 | SF9 | 125 |
| DR4 | SF8 | 125 |
| DR5 | SF7 | 125 |

The spreading factors SF7-SF12 define how many symbols are used to represent a single bit of data, with SF7 being the lowest spreading factor and SF12 being the highest spreading factor. SF7 means that each bit of data is spread across 2⁷ symbols, each symbol corresponding to a "chirp" signal that lasts for 2⁷ microseconds in a 125kHz bandwidth; SF8 means that each bit of data is spread across 2⁸ symbols, each symbol corresponding to a "chirp" signal that lasts for 2⁸ microseconds in a 125kHz bandwidth, and so on. As can be seen from the above table, the higher the spreading factor, the lower the data rate: the lowest data rate, DR0, of the predefined data rates has the highest corresponding spreading factor, SP12, of the predefined spreading factors. The data rate DR0 therefore enables the most robust transmission in poor communication conditions (due to the associated highest spreading factor), but requires a longer transmission time. Conversely, the highest data rate, DR5, of the predefined data rates has the lowest corresponding spreading factor, SP7, of the predefined spreading factors, and requires a shorter transmission time to transmit the same data.

Typically, the time taken to transmit data of a predetermined size approximately doubles per predefined data rate, when compared to the time taken to transmit data of a predetermined size at the preceding higher data rate, due to the spreading. For example, the time taken to transmit 10 bytes of data approximately doubles when using predefined data rate DR0 (associated with a spreading factor SF12) when compared to transmitting the same 10 bytes of data using predefined data rate DR1 (associated with a spreading factor SF11); and the time taken to transmit 10 bytes of data approximately quadruples when using predefined data rate DR0 (associated with a spreading factor SF12) when compared to transmitting the same 10 bytes of data using predefined data rate DR2 (associated with a spreading factor SF10). Therefore, the cost of increasing the robustness of communications is an increase in the time taken to transmit data, and therefore a decrease in the service life of the battery 232 of the utility metering device 200.

An exemplary method of transmitting, by a utility metering device 200, at least some items of data 302a-i of a set of data 300 is described below, with reference to Figures 1 to 4. Advantageously, the exemplary method may provide robust communications between the utility metering device 200 (at least for transmission of essential data), while preserving the service life of the battery 232 of the utility metering device 200.

402: Each item of data 302a-j of the set of data 300 is assigned a priority level, from a plurality of priority levels. Each priority level of the plurality of priority levels indicates an importance of the associated data. The skilled person will appreciate that each priority level of the plurality of priority levels indicates a different importance. The plurality of priority levels may sequentially progress from a priority level indicating the highest importance to a priority level indicating the lowest importance.

In the exemplary set of data 300 depicted in Figure 3, three priority levels are used: a first, highest, priority level (denoted by numerical value "1"); a second priority level (denoted by numerical value "2"), and a third priority level (denoted by numerical value "3"). The second priority level indicates a second highest importance, i.e. a lower importance compared to the first priority level, and the third priority level indicates a third highest importance, i.e. a lower importance when compared to the first and second priority levels. The skilled person will appreciate that further priority levels may be defined. For example, a fourth priority level indicating a fourth highest importance, a fifth priority level indicating a fifth highest importance, and a sixth priority level indicating a sixth highest importance.

The plurality of priority levels may comprise sequential numerical values, wherein a lower numerical value indicates a higher priority level. In the exemplary arrangements disclosed herein, the highest priority level is assigned the numerical value "1", and each further priority level is assigned the next integer numerical value, i.e. "2", "3", etc. The skilled person will also appreciate that alternative identifiers may be used, i.e. the priority levels need not comprise numerical values.

A data size limit for each priority level may be determined and set. The size of the data assigned a particular priority level does not exceed the data size limit for that particular priority level. The data size limit may be determined and set by the priority determiner 221. The skilled person will appreciate however that in alternative arrangements, this determination may be undertaken by a further device and communicated to the utility metering device 200. In exemplary arrangements, the data size limit for each priority level may be determined based on the size of the data assigned the first (or highest) priority level.

In one arrangement, the data size limit for each priority level is determined and set to be equal to the size of data associated with the one or more preceding, i.e. higher importance, priority levels. In other words, the data size limit is determined and set to be equal to the size of data associated with all of the preceding, higher importance, priority levels. For example, the data size limit for the second priority level, denoted by the number "2" in Figure 3, is determined and set to be equal to the size of the data assigned the first priority level, denoted by the number "1" in Figure 3. In the specific example shown in Figure 3, the total size of the data assigned the first priority level (i.e. the items of data 302a-e) is 30 bytes, and therefore the data size limit for the second priority level is 30 bytes. Similarly, the data size limit for the third priority level, denoted by the number "3" in Figure 3, is determined and set to be equal to the total size of the data assigned the first priority level and the second priority level. In the specific example shown in Figure 3, the total size of the data assigned the first and second priority levels (i.e. items of data 302a-i) is 46 bytes, and therefore the data size limit for the third priority level is 46 bytes. The data size limit of the first priority level may be predetermined, or in some implementations, there may be no data size limit for the first priority level.

In exemplary arrangements, the data size limits for each priority level may be determined and set dynamically, based on the size of the data assigned the first priority level. That is, the priority determiner 221 may monitor the size of the data assigned the first priority level, and update the data size limits for each subsequent priority level accordingly, at regular intervals, or in response to detected changes in the size of the data assigned the first priority level.

404: The transmission interval determiner 222 of the utility metering device 200, determines a desired transmission interval, T1, for transmitting one or more items of data 302a-j of the set of data 300. The set of data 300 may be stored in the memory 206 of the utility metering device 200.

The desired transmission interval, T1, defines the time duration between consecutive transmissions of data. The desired transmission interval, T1, may be fixed.

It will be understood that the transmission interval can significantly affect the service life of the battery 232 of the utility metering device 200. Shorter transmission intervals, in which the utility metering device 200 transmits data more frequently, cause faster depletion of the charge of the battery 232, since each transmission consumes battery power (therefore reducing the service life of the battery, due to the more frequent charge/discharge cycles). Longer transmission intervals result in less power consumption, and slower depletion of the charge of the battery 232 (therefore prolonging the service life of the battery, due to the less frequent charge/discharge cycles). The trade-off however is that data is not transmitted as frequently, which may be undesirable.

In exemplary arrangements, the desired transmission interval, T1, may be determined based on a desired (or predetermined) energy consumption from the battery 232, for example during an operating time of the utility metering device 200 (i.e. during the time in which the utility metering device 200 is awake). The desired energy consumption may be determined based on the maximum energy that is able to be stored by the battery 232. This may be a nominal maximum storage capacity or a measured/actual maximum storage capacity. For example, the desired energy consumption may be a percentage of the maximum energy able to be stored by the battery 232 (e.g. 80%, 70%, etc. of the maximum energy able to be stored by the battery 232). In exemplary arrangements the desired energy consumption may be determined based on a desired battery capacity consumption. As used herein, the term "battery capacity consumption" is taken to encompass the rate at which the stored energy within the battery 232 of the utility metering device 200 is depleted. It will be understood that a different metric/parameter indicative of energy consumption may be used, for example, a discharge rate, a total power expenditure, a capacity, etc.

The desired transmission interval, T1, may be determined based on the desired energy consumption during transmission of all of the items of data assigned the first priority level, at a first (i.e. the lowest) data rate of a plurality of predetermined data rates. For example, the desired transmission interval, T1, may be determined as the transmission interval that allows all of the items of data assigned the first priority level to be transmitted at the first data rate, without exceeding the desired energy consumption.

The plurality of predefined data rates may comprise the data rates DR0 to DR5, as defined above, and therefore the first, lowest, data rate is DR0. Since the transmission time for transmitting a given amount of data at data rate DR0 is greater than the transmission time for transmitting the same given amount of data at any of the other data rates, DR1-DR5, in this way, the desired transmission interval, T1, is determined such that all of the highest priority data can be transmitted in full at the desired transmission interval, T1, without exceeding the desired energy consumption, regardless of the data rate used for transmission (which will be discussed in more detail below).

In alternative arrangements, the desired transmission interval may be alternatively defined. For example, the desired transmission interval may be predefined based on system requirements, etc. In such arrangements, the duration of the desired transmission interval, T1, may be defined such that it is greater than, or equal to, the amount of time that would be taken to transmit all of the data assigned the first priority level at the first data rate, DR0. In this way, all of the highest priority data is able to be transmitted at the desired transmission interval, T1, regardless of the transmission data rate.

406: A transmission data rate is determined. The transmission data rate is the data rate at which one or more of the items of data 302a-j are transmitted from the utility metering device 200 and to the further device. The transmission data rate may be determined using Adaptive Data Rate (ADR) or other feedback, as will be known to the skilled person. ADR allows the transmission data rate of an end device, such as the utility metering device 200, to be selected and controlled based on the network conditions and signal quality, which may for example, be determined based on a signal strength and a signal-to-noise ratio of data/signals received from the utility metering device 200. ADR may be performed by a further device (e.g. a gateway, the root node, or network server), and the utility metering device 200 may receive a command to use the determined transmission data rate to transmit data to the further device. In such examples, the transmission data rate determiner 224 of the utility metering device may determine the transmission data rate based on the command received from the further device.

In alternative arrangements, the transmission data rate determiner 224 of the utility metering device 200 may determine the transmission data rate, for example, based on a signal strength and a signal-to-noise ratio of data/signals received from the further device (to which data is to be transmitted from the utility metering device 200).

The determined transmission data rate may comprise one of the plurality of predefined data rates. As outlined above, the plurality of predefined data rates may comprise the data rates DR0 to DR5.

408: The data transmission determiner 226 of the utility metering device 200 determines the transmission interval at which one or more items of data 302a-j, of the set of data 300, are transmitted by the transmitter 204, based on the determined transmission data rate, and the priority level of each item of data 302a-j.

Specifically, the data transmission determiner 226 determines whether only data assigned the first (highest) priority level is to be transmitted at the desired transmission interval, T1, or whether data assigned the first priority level and data assigned one or more of the subsequent (lower) priority levels is able to be transmitted at the desired transmission interval, T1.

As outlined above, in respect of step 404, the desired transmission interval, T1, is defined so that all data assigned the first (highest) priority level, is able to be transmitted with the desired transmission interval, T1, at the first, lowest, data rate (DR0), without exceeding the desired energy consumption. As such, all items of data assigned the first priority level are transmitted in full at the desired transmission interval, T1, regardless of the determined data rate (i.e. regardless of the network conditions, and therefore regardless of whether the determined data rate is any of DR0-DR5).

In this specific example, if the determined data rate is the first (lowest) data rate, DR0, the data transmission determiner 226 determines that only the items of data 302a-e, assigned the first priority level, are to be transmitted at the desired transmission interval, T1.

If the determined data rate is a higher data rate than the first (lowest) data rate, DR0, the data transmission determiner 226 may determine that all items of data assigned the first priority level, and one or more items of data assigned a subsequent, lower, priority level (e.g. the second or third priority level) are also able to be transmitted at the transmission interval, T1.

If the determined data rate is the second lowest data rate, DR1, the data transmission determiner 226 determines that all of the items of data assigned the first priority level, and all of the items of data assigned the second priority level, are able to be transmitted in the same transmission and at the desired transmission interval, T1. In the specific example given in Figure 3, the data transmission determiner 226 would therefore determine that the items of data 302a - 302i are able to be transmitted in the same transmission and at the desired transmission interval, T1.

If the determined data rate is the third lowest data rate, DR2, the data transmission determiner 226 determines that all of the items of data assigned the first priority level, all of the items of data assigned the second priority level, and all of the items of data assigned the third priority level, are able to be transmitted in the same transmission and at the desired transmission interval, T1. In the specific example given in Figure 3, the data transmission determiner 226 would therefore determine that all of the items of data 302a-j are able to be transmitted in the same transmission and at the desired transmission interval, T1.

Continuing with this specific example, if the determined data rate is any one of the fourth, fifth and sixth data rates (i.e. any one of DR3-DR5), the data transmission determiner 226 determines that all of the items assigned the first priority level, all of the items of data assigned the second priority level, and all of the items of data assigned the third priority level, are able to be transmitted in the same transmission and at the desired transmission interval, T1.

This is because, as outlined above, the time taken to transmit data of a predetermined size, approximately doubles per predefined data rate decrease due to the corresponding increase in spreading factor. For example, the time taken to transmit 10 bytes of data approximately doubles when using predefined data rate DR0 (associated with a spreading factor SF12) when compared to transmitting the same 10 bytes of data using predefined data rate DR1 (associated with a spreading factor SF11).

In this example, the size of the data assigned the first priority level is 30 bytes. Approximately double the amount of data (i.e. 60 bytes) may be transmitted during the same amount of time, at the second data rate, DR1 (and therefore using approximately the same amount of energy from the battery 232- i.e. maintaining the desired energy consumption). Since the data size limit for the second priority level is set to be no more than double the size of the data assigned the first priority level (i.e. no more than 30 bytes), the size of the data assigned to both the first priority level and the second priority level is no more than 60 bytes. Therefore, all of the data assigned a first and second priority level is able to be transmitted at the second data rate, DR1, in the same amount of time that it would take to transmit only the data assigned the first priority level at the first data rate, DR0, and while maintaining the desired energy consumption.

Similarly, approximately double the amount of data (i.e. up to 120 bytes) may be transmitted at the third data rate, DR2, when compared to the second data rate, DR1, during the same amount of time. Since the data size limit for the third priority level is set to be no more than double the size of the data assigned the first priority level and the second priority level (i.e. no more than 60 bytes, using an example that assumes the maximum amount of second priority level data is assigned), the size of the data assigned to all of the first, second and third priority levels is no more than 120 bytes. Therefore, all of the data assigned the first, second and third priority levels, is able to be transmitted at the third data rate, DR2, in the same amount of time that it would take to transmit only the data assigned the first priority level at the first data rate, DR0, and the data assigned the first priority level and the second priority level at the second data rate, DR1, and maintaining the desired energy consumption.

The skilled person will appreciate that a similar process may be followed if fourth, fifth and sixth priority levels are defined, in a similar way to as outlined above. That is, if the determined data rate is the fourth data rate, DR3, the data transmission determiner 226 determines that all of the items of data assigned the first, second, third and fourth priority levels, are able to be transmitted in the same transmission and at the desired transmission interval, T1. If the determined data rate is the fifth data rate, DR4, the data transmission determiner 226 determines that all of the items of data assigned the first, second, third, fourth and fifth priority levels, are able to be transmitted in the same transmission and at the desired transmission interval, T1. If the determined data rate is the sixth data rate, DR5, the data transmission determiner 226 determines that all of the items of data assigned the first, second, third, fourth, fifth and sixth priority levels, are able to be transmitted in the same transmission and at the desired transmission interval, T1. In exemplary arrangements, the predefined priority levels may comprise six priority levels. As such, all of the data in a set of data may be transmitted by the utility metering device 200 at the sixth data rate, DR5.

410: The controller 220 may control the transmitter 204 to transmit, to the further device, the one or more items of data 302a-j determined by the data transmission determiner 226, at the desired transmission interval, T1.

Advantageously, using the above outlined method avoids undesired reduction in the service life of a battery 232 of a utility metering device 200, while still allowing the highest priority data to be transmitted by the utility metering device 200 and to a further device at a highest acceptable frequency (i.e. the highest frequency achievable without exceeding a desired energy consumption). This is in contrast to known arrangements, which increase the transmission interval to accommodate transmission of all data from the utility metering device 200, when network conditions demand that the lowest data rate, DR0, is used for transmission (reducing the frequency at which data is transmitted by the utility metering device 200 and received by the further device).

In alternative methods, a plurality of transmission intervals may be defined, each of the desired transmission intervals corresponding to a different priority level. An alternative method 500 is described below, with reference to Figures 1 to 6.

502: Each item of data 302a-j of the set of data 300 is assigned a priority level, from a plurality of priority levels, in substantially the same way as described in respect of step 402 of Figure 4.

504: The transmission interval determiner 222 of the utility metering device 200, determines a desired transmission interval, T1, for transmitting one or more items of data 302a-j of the set of data 300. Similarly to as described above, in respect of step 404 of Figure 4, the transmission interval determiner 222 determines the desired transmission interval, T1, based on a desired energy consumption.

In this exemplary arrangement however, the desired transmission interval, T1, may be determined based on transmission of a predetermined size of data at the first (lowest) data rate, DR0, without exceeding the desired energy consumption over an operating period of the utility metering device. The predetermined size of data may be different to the size of the data assigned the first priority level.

In this example, the predetermined size of data may be set to be greater than the size (or length) of the data assigned the first priority level. Therefore, taking the exemplary data set 300, the predetermined size of the data may be set to be greater than 30 bytes. The predetermined size of data may be set to be the size of the data assigned the first priority level, plus an additional amount of data.

In such an arrangement, the size of the additional amount of data may be equal to the size of the largest single item of data assigned a priority level lower than the first priority level. For example, in the exemplary set of data 300 shown in Figure 3, there are two priority levels lower than the first priority level that are associated with items of data: the second priority level, denoted by the number "2" and assigned to items of data 302f-i, and the third priority level, denoted by the number "3" and assigned to the item of data 302j. The largest single item of data assigned either a second or third priority level, is 4 bytes (any one of items of data 302f-i).

The predetermined size of data may be set to be equal to (or greater than) the size of the data assigned the first priority level plus the size of the largest item of data assigned a subsequent priority level. In the exemplary set of data 300, the predetermined size of data would therefore be equal to (or greater than) 34 bytes. In exemplary arrangements, the predetermined size of data may be set to be equal to the size of the data assigned the first priority level, plus a multiple of the size of the largest item of data assigned a subsequent priority level, for example twice the size of the largest item of data assigned a subsequent priority level.

In alternative arrangements, the size of the additional amount of data may be a predetermined value, or a percentage of the size of the data assigned the first priority level.

For the purposes of this example, the predetermined size of data is taken to be 38 bytes. As such, the desired transmission interval, T1, is determined based on transmitting of 38 bytes of data at the first data rate, DR0, without exceeding the desired energy consumption.

506: A transmission data rate is determined in substantially the same way as outlined in respect of step 406 of Figure 4.

508: The data transmission determiner 226 of the utility metering device 200 determines the transmission interval at which one or more items of data 302a-j, of the set of data 300, are transmitted by the transmitter 204, based on the determined transmission data rate, and the priority level of each item of data 302a-j.

In this example however, the data transmission determiner 226 may determine transmission intervals for each priority level.

Similarly to as outlined above in respect of step 408 of Figure 4, all of the data assigned the first (highest) priority level is transmitted at the desired transmission interval, T1, regardless of the determined transmission data rate. Therefore, the transmission determined 226 determines that the transmission interval for transmitting the data assigned the first priority level is the desired transmission interval.

The data transmission determiner 226 may determine further transmission intervals for transmitting data assigned a priority level lower than the first priority level. The further transmission intervals may be different to the desired transmission interval. In exemplary methods, the further transmission intervals may be multiples of the desired transmission interval. In this particular example, the data transmission determiner 226 may determine a second transmission interval for transmitting the data assigned the second priority level, and a third transmission interval for transmitting the data assigned the third priority level. The skilled person will appreciate that where further priority levels are assigned to items of data (e.g. a fourth, fifth or sixth priority level), corresponding transmission intervals for each further priority level may be determined.

The further transmission intervals may be determined based on the determined transmission data rate, and the size of the additional amount of data used to determine the desired transmission interval in step 504.

For example, the determined transmission data rate may be the lowest data rate, DR0. In this example, the size of the additional amount of data that was used to determine the desired transmission interval was 8 bytes. Therefore, 8 bytes of data may be transmitted in the same transmission as the 30 bytes of data assigned the first priority level 302a-e, at the desired transmission interval, T1, without exceeding the desired energy consumption.

The data transmission determiner 226 determines that one or more items of data assigned the next highest priority level (i.e. the second priority level), may be transmitted in the same transmission as the data assigned the first priority level, at the desired transmission interval, T1. If the size of the data assigned the second priority level is greater than the size of the additional amount of data used to determine the desired transmission interval, T1, the data transmission determiner 226 determines a second transmission interval for the second priority level, wherein each item of data assigned the second priority level is transmitted in the same transmission as the data assigned the first priority level, at the second transmission interval.

For example, in the particular example of Figure 3, there 16 bytes of data assigned the second priority level, made up of four items of data 302f-i each of 4 bytes in size. Since this is a greater size than the size of the additional amount of data that was used to determine the desired transmission interval (i.e. 8 bytes), the data transmission determiner 226 determines that not all of the data assigned the second priority level can be transmitted in the same transmission as the data assigned the first priority level, at the desired transmission interval, T1, without exceeding the desired energy consumption. Instead, the data transmission determiner 226 splits the items of data 302f-i assigned the second priority level into subsets. The maximum size of each subset is limited to be equal to the size of the additional amount of data used to determine the desired transmission interval (in this case, 8 bytes). Therefore, in this example, a first subset comprising items of data 302f and 302g is defined (totalling 8 bytes), and a second subset comprising items of data 302h and 302i is defined (totalling 8 bytes). The data transmission determiner 226 may determine the second transmission interval based on the number of subsets. Specifically the second transmission interval may be determined by multiplying the desired transmission interval, T1, by the number of subsets. In this example therefore, the second transmission interval would be 2 x T1. Each subset of data is sent in the same transmission as the data assigned the first priority level, but at the second transmission interval. In this example, this means that each subset is sent in alternative transmissions.

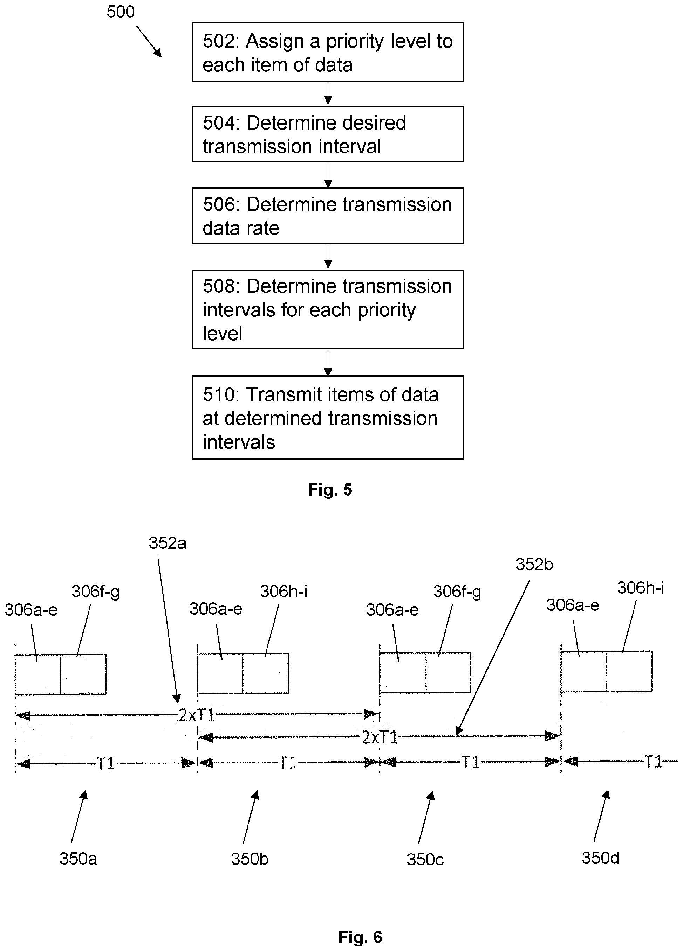

This is depicted schematically in Figure 6. Figure 6 shows four sequential transmissions of data, 350a-d, at the desired transmission interval, T1. The data assigned the first priority level 302a-e is transmitted in each of the four transmissions, 350a-d, at the desired transmission interval, T1. The first subset of data comprising the items of data 302f and 302g assigned the second priority level is transmitted in the same transmission as the data assigned the first priority level 302a-e, but at the second transmission interval, 352a: 2 x T1. The second subset of data comprising the items of data 302h and 302i is transmitted in the same transmission as the data assigned the first priority level, but at the second transmission interval, 352b: 2 x T1. The first and second subsets are alternately transmitted along with the data assigned the first priority level, at the second transmission interval. That is, in the first transmission 350a, the first subset is sent with the data assigned the first priority level, and in the second transmission 350b the second subset is sent with the data assigned the first priority level, and so on. As such, the transmissions comprising the first and second subsets are offset from each other by a time equal to the desired transmission interval, T1. In this specific example, the transmissions comprising the first and second subsets are mutually offset from each other.

It will be understood that a similar process may be undertaken where further subsets are defined. That is, if three subsets were defined, the second transmission interval may be determined to be 3 x T1, and so on.

A similar process may be undertaken when the determined transmission data rate is a higher data rate than DR0. For example, if the determined transmission data rate is the second lowest data rate of the plurality of data rates, DR1, the data transmission determiner 226 may determine that all of the data 302a-e assigned the first priority level, and all of the data 302f-i assigned the second priority level may be transmitted at the desired transmission interval, T1. This is because as outlined above, at data rate DR1 approximately double the amount of data may be sent in the same time (and therefore at the same energy consumption) when compared to the amount of data sent at data rate DR0. As outlined above, the desired transmission interval, T1, is defined based on transmitting 38 bytes of data at the lowest data rate, DR0, without exceeding the desired energy consumption. As such, at the second lowest data rate, DR1, of the plurality of data rates approximately 76 bytes of data can be transmitted at the desired transmission interval, T1, without exceeding the desired energy consumption. As such, all of the data assigned the first priority level and all of the data assigned the second priority level (totalling 46 bytes) may be transmitted at the desired transmission interval, T1. Therefore the data transmission determiner 226 determines that the second transmission interval is equal to the desired transmission interval, T1.

Similarly to as outlined above, the data transmission determiner 226 determines that one or more items of data assigned the next highest priority level (i.e. the third priority level), may be transmitted at the desired transmission interval, T1, in addition to the data assigned the first priority level and the second priority level. In this example, the only a single item of data 302j is assigned the third priority level, and the size of the item of data 302j is 2 bytes. Since an additional 30 bytes per transmission is available, the data transmission determiner 226 determines that the data assigned the third priority level does not need to be split into multiple subsets, and therefore the third transmission interval is T1. In this example, each transmission will include all of the data assigned the first, second and third priority levels, and all of the data assigned the first, second and third priority levels will be sent in the same transmission at the desired transmission interval, T1. An additional 28 bytes per transmission is available. It will be understood, that if there were additional items of data assigned the next highest priority level (i.e. a fourth priority level), the data transmission determiner 226 may determine that one or more items of data assigned the fourth priority level may be transmitted, and may determine a fourth transmission interval for the items of data assigned the fourth priority level in a similar way to as outlined above.

It will be understood that in a different example, the size of the data assigned the next highest priority level (i.e. the third priority level) may be greater than the additional number of bytes available per transmission (i.e. greater than 30 bytes). In such examples, the data transmission determiner 226 may split the items of data assigned the third priority level into subsets, and determine the third transmission interval for transmitting each subset based on the number of subsets (similarly to as outlined above).

510: The controller 220 controls the transmitter 204 to transmit the one or more items of data as determined by the data transmission determiner 226, at the transmission intervals determined by the data transmission determiner 226.

Advantageously, the above-outlined method allows for the transmission of the largest amount of data at the maximum frequency, without increasing the transmission intervals, and therefore without exceeding a desired energy consumption.

In exemplary arrangements, the utility metering device 200 may comprise a transmission power determiner 230. The transmission power determiner 230 is configured to determine a required transmission power to facilitate data transmission from the utility metering device 200 and to the further device.

In either of the methods 400, 500 outlined above, the data transmission determiner 226 may determine the one or more items of data to be transmitted at the desired transmission interval, T1, based on the determined transmission data rate, the priority level of each item of data 302a-j and the required transmission power.

A predicted energy consumption is determined by the transmission power determiner 230 based on the required transmission power. This may be calculated, based on the required transmission power and the desired transmission interval. Alternatively, a mapping or correlation table may be stored in the memory 26 of the utility metering device 200, which maps transmission power to energy consumption.

If the predicted energy consumption is less than the desired energy consumption, the data transmission determiner 226 determines that further items of data may be sent at the desired transmission interval, T1, without exceeding the desired energy consumption.

For example, if a required transmission power is not considered when determining which items of data 302a-j to transmit at the desired transmission interval, T1, the data transmission determiner 226 may determine that only data assigned the first priority level is able to be transmitted at the desired transmission interval, T1 (see, for example methods 400 and 500). However, if the data transmission determiner 226 determines that that predicted energy consumption (determined based on the required transmission power) is less than the desired energy consumption, the data transmission determiner 226 may determine that the items of data assigned the first priority level and one or more items of data assigned a priority level lower than the first priority level may be transmitted at the desired transmission interval, T1, without exceeding the desired energy consumption. For example, the data transmission determiner 226 may determine that all items of data assigned the first priority level and all items of data assigned the second priority level may be sent at the desired transmission interval, T1, without exceeding the desired energy consumption. This may increase the transmission time (i.e. the time taken to transmit the determined items of data) however the desired energy consumption is not exceeded, and so the transmission time increase may be acceptable.

In exemplary arrangements, the data transmission determiner 226 may determine the size of the further data that may be transmitted at the desired transmission interval, T1, in addition to the data assigned the first priority level, at the required transmission power, while maintaining the desired energy consumption. The further data to be transmitted may then be determined using any of the methods outlined above in respect of methods 400 or 500.

It will be appreciated by the person of skill in the art that various modifications may be made to the above described embodiments without departing from the scope of the invention. The word "exemplary" is used herein to mean "an example". Any embodiment described herein as "exemplary" is not necessarily to be construed as preferred or advantageous over other embodiments.

A computer program may be configured to provide any of the above described methods. The computer program may be provided on a computer readable medium. The computer program may be a computer program product. The product may comprise a non-transitory computer usable storage medium. The computer program product may have computer-readable program code embodied in the medium configured to perform the method. The computer program product may be configured to cause at least one processor to perform some or all of the method.

Various methods and apparatus are described herein with reference to block diagrams or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

Computer program instructions may also be stored in a computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

A tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/Blu-ray).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks.

Accordingly, the invention may be embodied in hardware and/or in software (including firmware, resident software, micro-code, etc.) that runs on a processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated.

## Claims

1. A method of transmitting data, by a utility metering device and to a further device, using long range, LoRa, communications, the method comprising:
assigning, to each item of data of a plurality of data to be transmitted by the utility metering device and to the further device, a priority level from a plurality of priority levels;
determining a desired transmission interval based on a desired energy consumption from a power source powering the utility metering device, during transmission, by the utility metering device, of a predetermined size of data at a first data rate associated with a first spreading factor, wherein the first data rate is one of a plurality of predefined data rates, each data rate of the plurality of data rates being associated with a corresponding spreading factor, and wherein the first data rate is the lowest data rate of the plurality of predefined data rates and the first spreading factor is the highest spreading factor of the corresponding spreading factors;
determining a transmission data rate;
determining which one or more items of data, of the plurality of data, to transmit at the desired transmission interval, based on the determined transmission data rate and the priority level assigned to each item of data; and
transmitting the determined one or more items of data to the further device at the desired transmission interval using the determined transmission data rate.

2. A method according to claim 1, wherein the power source is a battery.

3. A method according to claim 2, wherein the desired transmission interval is determined based on the desired energy consumption from the battery, during an awake time of the utility metering device, during transmission of the predetermined size of data at the first data rate.

4. A method according to any preceding claim, wherein the transmission data rate is one of the plurality of predefined data rates.

5. A method according to any preceding claim, wherein the plurality of priority levels comprises a first priority level indicating a highest priority, and wherein the predetermined size of data is equal to or greater than a size of item(s) of data assigned the first priority level.

6. A method according to claim 5, when dependent on claim 4, wherein the predetermined size of data is equal to the size of the item(s) of data assigned the first priority level, and wherein if the determined transmission data rate is the first data rate, only the item(s) of data assigned the first priority level are transmitted to the further device at the desired transmission interval.

7. A method according to claim 6, wherein if the determined transmission data rate is a data rate higher than the first data rate, the item(s) of data assigned the first priority level and item(s) of data associated with a further priority level, lower than the first priority level, are determined to be transmitted to the further device at the desired transmission interval.

8. A method according to any of claims 5 to 7, wherein the plurality of priority levels further comprises a second priority level, indicating a second highest priority, and wherein a size of item(s) of data assigned the second priority level is less than or equal to the size of the item(s) of data assigned the first priority level.

9. A method according to any preceding claim, wherein the plurality of data rates comprises a second data rate associated with a second spreading factor, and wherein the second data rate is the second lowest data rate of the plurality of predefined data rates and the second spreading factor is the second highest spreading factor of the corresponding spreading factors.

10. A method according to claim 9, when dependent on claim 8, wherein if the determined transmission data rate is the second data rate, the item(s) of data assigned the first priority level and the item(s) of data assigned the second priority level are determined for transmission to the further device at the desired transmission interval.

11. A method according to claim 10, wherein the plurality of priority levels further comprises a third priority level, indicating a third highest priority, and wherein a size of item(s) of data assigned the third priority level is less than or equal to the size of the item(s) of data assigned the first priority level plus the item(s) of data assigned the second priority level,
wherein the plurality of data rates comprises a third data rate associated with a third spreading factor, and wherein the third data rate is the third lowest data rate of the plurality of predefined data rates and the third spreading factor is the third highest spreading factor of the corresponding spreading factors, and
wherein if the determined transmission data rate is the third data rate, the item(s) of data assigned the first priority level, the item(s) of data assigned the second priority level, and the item(s) of data assigned the third priority level are determined for transmission to the further device at the desired transmission interval.

12. A method according to claim 5, further comprising:
determining that the item(s) of data assigned the first priority level are to be transmitted at the desired transmission interval;
determining a further transmission interval for each priority level, of the one or more priority levels, different to the first priority level, each further transmission interval defining the interval at which data assigned the corresponding priority level is to be transmitted; and
determining that item(s) of data assigned a priority level different to the first priority level are to be transmitted at the corresponding further transmission interval.

13. A method according to claim 12, wherein the predetermined size of data used to determine the desired transmission interval is greater than the size of the item(s) of data assigned the first priority level by an additional amount of data, and wherein each further transmission interval is determined based on the transmission data rate and the size of the additional amount of data.

14. A method according to claim 13, wherein the plurality of priority levels further comprise a second priority level, indicating a second highest priority, and wherein determining the further transmission interval for the second priority level comprises:
comparing a size of item(s) of data assigned the second priority level to the size of the additional amount of data; and
defining a second transmission interval for transmission of the item(s) of data assigned the second priority level if the size of the item(s) of data assigned the second priority level is greater than the size of the additional amount of data, the second transmission interval being greater than the desired transmission interval.

15. A method according to claim 14, further comprising:
splitting the item(s) of data assigned the second priority level into one or more subsets, the maximum size of each subset being equal to the size of the additional amount of data;
determining the second transmission interval by multiplying the desired transmission interval by the number of subsets; and
transmitting each subset at the second transmission interval.
